# EUROPEAN PATENT APPLICATION

(11) **EP 2 275 981 A1**
(43) Date of publication of application: **19.01.2011**
(21) Application number: 10251112.8
(22) Date of filing: 17.06.2010
(51) Int. Cl.: G06Q 10/00

(54) **Distributed system and method for management of multiple users and workspaces**

(30) Priority: 17.06.2009 US 187940 P
(71) Applicant: SMART Technologies ULC, Calgary, Alberta T2L 1Y1 (CA)
(72) Inventor: Martin, David, Calgary, Alberta T2P 0E6 (CA); Banerjee, Shymmon, Calgary, Alberta T3A 1Z4 (CA); Leung, Andrew, Calgary, AB T1Y 5K1 (CA); Farooq, Umar, Calgary, Alberta T3L 3E3 (CA); Vanetti, Paul, Calgary, Alberta T2J 3Y6 (CA)
(74) Representative: Naismith, Robert Stewart

(57) **Abstract**

A distributed system for managing users and workspaces comprises a network cloud comprising at least one server configured to store and run at least one application and at least one meeting appliance configured to communicate with the network cloud, to run the at least one application on the network cloud, and to display output of the at least application on the meeting appliance.

## Description

### Related Application

This application is related to U.S. Provisional Application No. 61/122,107 to Bezemer et al., filed on December 12, 2008, entitled "System for Supporting Coordination of Resources for Events in an Organization", the content of which is incorporated herein by reference in its entirety.

### Field of the Invention

The present invention relates generally to workspace management and in particular, to a distributed system and method for management of multiple users and workspaces.

### Backgound of the Invention

Meeting management software products are well-known. Such meeting management software products are capable of permitting access to prearranged files and applications within an organization to its employees, its meeting rooms, and on meeting room equipment. While preparing for and conducting a meeting, a user of the meeting management software is able to create, view, and edit files with other participants in the meeting.

While the above-described meeting management software can be useful, improvements are desirable. Such meeting management software products do not adapt well to suit the needs of the participants in a meeting. Furthermore, organizations often have a limited number of meeting rooms, multimedia, as well as equipment such as voice bridges, conferencing cameras, interactive technology, etc. Often participants maintain busy and ever-changing workplace schedules, moving back and forth between corporate office locations or off-site locations, yet require quick access to a large number of files distributed among various file storage locations. Coordination of these resources is difficult, even when they are available, due to conflicting schedules and the locations of the participants and resources.

Moreover, such meeting management software products do not take into account the software applications to which the participants have access or may require for the meeting. Meeting locations often have limited hardware which is not consistently used and as such may not have access to the software applications that participants might require in order to demonstrate a particular project or file. These situations are more likely to arise as organizations become more stringent with their budgeting, and the number of software licences an organization acquires becomes limited.

It is therefore an object of the present invention to provide a novel distributed system and method for management of multiple users and workspaces.

### Summary of the Invention

According to one aspect there is provided a system for managing users and workspaces comprising a network cloud comprising at least one server configured to store and run at least one application; and at least one local meeting appliance configured to communicate with the network cloud to run the at least one application on the network, and to display output of the application on the local meeting appliance.

In one embodiment, the at least one meeting application is configured to send interactive input associated with the at least one application to the network cloud. The at least one meeting application updates the display output of the at least one application based on the interactive input. In one form, the at least one meeting appliance is an interactive whiteboard.

In another embodiment, the network cloud is configured to store and run a plurality of applications and the at least one meeting appliance is configured to run at least some of the applications. The at least one meeting appliance provides user access only to authorized applications established for the user of the at least one meeting appliance. The authorized applications are determined based on user identification information. In one form, the at least one application comprises a file access application. The file access application is configured to access at least one file on the network cloud.

In one embodiment, the network cloud and the at least one meeting appliance employ software agents. The at least one meeting appliance and the network cloud communicate via distributed agents resident on the at least one meeting appliance and the network cloud.

According to another aspect, there is provided a method comprising sending a message from at least one meeting appliance to a network cloud; executing the at least one application on the network cloud in response to the received message; sending graphical output of the at least one application from the network cloud to the at least one meeting appliance; and displaying the graphical output on the at least one meeting appliance.

In one embodiment, the method further comprises sending interactive input associated with the at least one application from the at least one meeting appliance to the network cloud in response to user interaction with the at least one meeting appliance, updating the graphical output of the at least one application based on the interactive input and sending the updated graphical output to the at least one meeting appliance for display thereon.

According to another aspect, there is provided a meeting appliance comprising a display; a processor; and memory storing program code, the processor communicating with the memory and executing the program code to cause the meeting application to communicate with a network cloud, to run at least one application on the network cloud, and to present output of the at least application on the display.

### Brief Description of the Drawings

Embodiments will now be described more fully with reference to the accompanying drawings in which:

Figure 1 is an exemplary schematic diagram of a distributed system for management of multiple users and workspaces;

Figure 2 is a detailed exemplary schematic diagram of the distributed system of Figure 1;

Figure 3 is a block diagram of a meeting appliance forming part of the distributed system of Figure 1;

Figure 4A is a screenshot of a graphical interface displayed by a meeting appliance in the form of an interactive whiteboard employing a meeting appliance application;

Figure 4B is another screenshot of the graphical interface displayed by the interactive whiteboard employing the meeting appliance application and accessing an external file system;

Figures 5A to 5C are further screenshots of the graphical interface displayed by the interactive whiteboard employing the meeting appliance application and showing an open application;

Figure 6 is yet another screenshot of the graphical interface displayed by the interactive whiteboard employing the meeting appliance application and showing available applications and projects corresponding to a specific user; and

Figure 7 is still yet another screenshot of the graphical interface displayed by the interactive whiteboard employing the meeting appliance application and showing available whiteboard applications for a specific user.

### Detailed Description of the Embodiments

In the following, a distributed system for managing multiple users and workspaces is described. The distributed system comprises distributed meeting appliances within an organization, potentially located at the same geographical location within the organization or remotely at off-site geographical locations, which are in communication with a network cloud. Software applications may reside on one or more meeting appliances, on servers within the network cloud, or partially on both the meeting appliances and the network cloud. Each meeting appliance makes use of software agents to communicate over the distributed system between the network cloud and the local hardware of the meeting appliance.

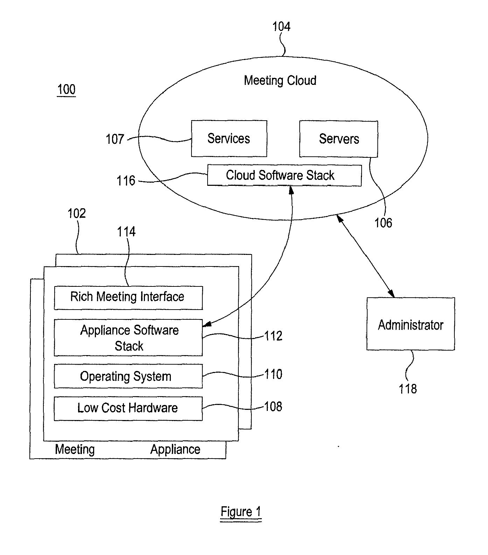

Turning to Figure 1, a distributed system for managing multiple users, workspaces and software applications is shown and is generally identified by reference numeral 100. The distributed system 100 in this example comprises a meeting appliance 102 physically located at a meeting location within an organization, such as for example a boardroom, conference room or the like, a meeting cloud 104 comprising a cloud of servers 106 and services 107, and a cloud software stack 116 and an administrator 118. Although only one meeting appliance 102 is illustrated, those of skill in the art will appreciate that this is for ease of illustration. The distributed system 100 will typically comprise multiple meeting appliances 102 physically located either at the same meeting location or at different meeting locations.

The meeting cloud 104 may be public where the servers 106 and services 107 are hosted outside the firewall (not shown) of the organization or private where the servers 106 and services 107 are hosted behind the firewall of the organization. The meeting cloud 104 may also be a hybrid cloud where some servers 106 and services 107 are hosted behind the firewall and others are hosted outside of the firewall.

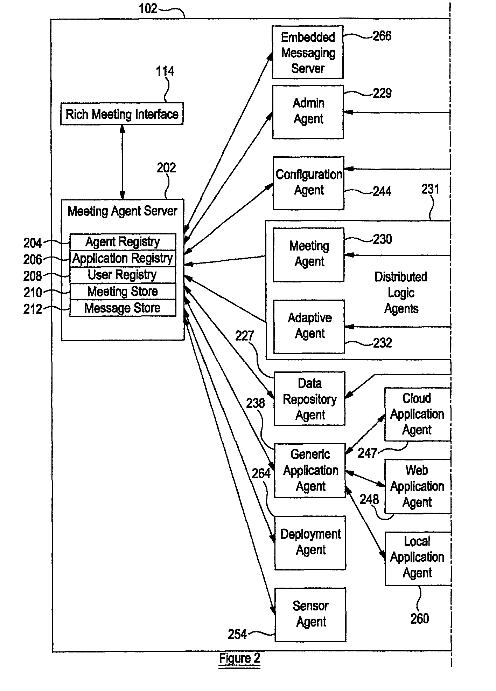

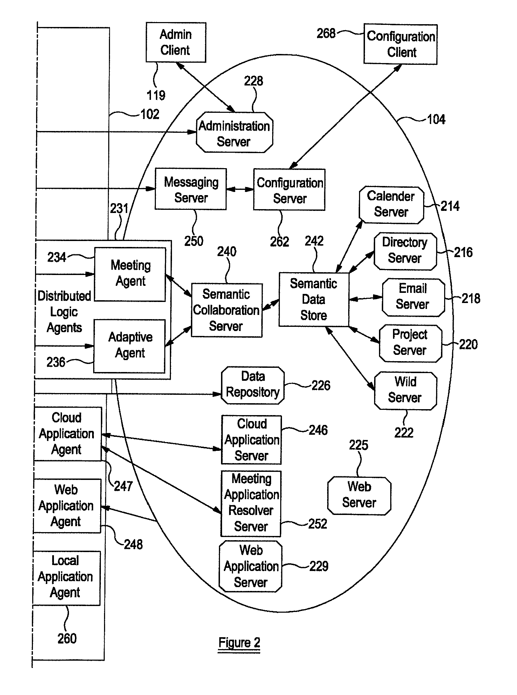

The meeting appliance 102, in this embodiment, comprises low cost, low-power computer processor hardware 108 running an operating system 110, a lightweight appliance software stack 112 and a rich meeting interface 114. The processor hardware 108 of the meeting appliance 102 is typically located where the meeting takes place. The operating system 110 of the processor hardware 108 may be an open source operating system or a commercial operating system, which can reside on a magnetic hard drive, optical media, flash media, or other type of rewriteable or read-only storage well known to those skilled in the art. The operating system 110 may run on a desktop computer, a laptop computer, a personal digital assistant (PDA), a cellular telephone, or other suitable device and connect to the meeting cloud 104 via a suitable wired or wireless communication link. The operating system 110 runs, among other things, a thin client rich internet application (RIA) configured to communicate with the meeting cloud 104, and access online files, documents, and collaborations within the meeting cloud 104. The meeting appliance 102 also hosts a meeting agent server 202 and an embedded messaging server 266 (see Figure 2) as will be described.

Meeting room applications are enabled with the meeting appliance 102 by suitably partitioning the overall distributed system software between the appliance software stack 112 and the cloud software stack 116. The distributed system 100, to an extent, allows configuring relative sizes of the cloud software stack 116 and the appliance software stack 112. This partitioning may be based on the capacity of the processor hardware 108 of the meeting appliance 102.

In a typical configuration, most of the distributed system software and data resides in the cloud software stack 116 since the capacity of its supporting hardware is generally greater than that of the processor hardware 108 of the meeting appliance 102. The appliance software stack 112 of the meeting appliance 102 communicates with the cloud software stack 116 using distributed logic agents 231 as shown in Figure 2. In this example, the distributed logic agents 231 comprise meeting agents 230 and 234 and adaptive agents 232 and 236. The distributed logic agents 231 reside partly on the meeting cloud 104 (meeting agent 234 and adaptive agent 236) and partly on the meeting appliance 102 (meeting agent 230 and adaptive agent 232). Thus, the state of the meeting appliance 102 partly resides on the meeting cloud 104 and partly resides on the meeting appliance 102. The distributed system 100, however, hides this separation from the end user as the end user seamlessly interacts with a set of heterogeneous meeting room applications, services and data irrespective of, and without any knowledge of, their relative locations.

In addition to the distributed logic agents 231, the meeting appliance 102 also comprises a number of other agents. As can be seen in Figure 2, the meeting appliance 102 comprises a data repository agent 227, an administration agent 229, a generic application agent 238, a configuration agent 244, a cloud application agent 247, a web application agent 248, a sensor agent 254, a local application agent 260 and a deployment agent 264. These agents are executed by the meeting agent server 202 which as can be seen, comprises an agent registry 204, an application registry 206, a user registry 208, a meeting state 210 and a message store 212.

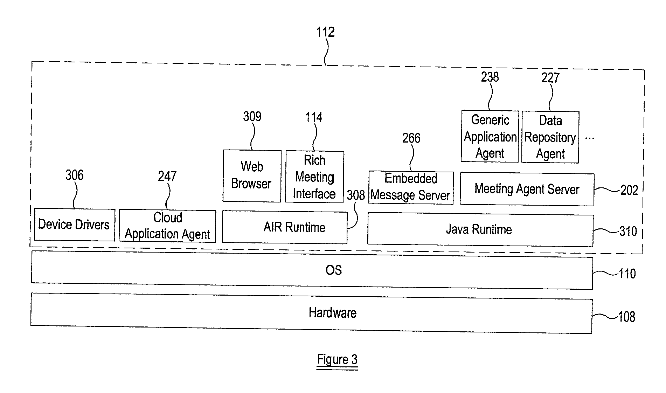

Figure 3 further illustrates the meeting appliance 102. In this example, the appliance software stack 112 comprises device drivers 306 and the cloud application agent 247, both of which are operating-system-specific and run directly on top of the operating system 110. An Adobe® AIR™ runtime platform 308 provides the platform from which the rich meeting interface 114 is executed. From this, the main meeting appliance application and the web browser 309 used for all browser-based applications are run. A Java runtime platform 310 provides the platform on which the embedded message server 266 and the meeting agent server 202 are hosted.

In this embodiment, meeting application 102 is an interactive whiteboard such as that sold under the name SMARTBoard™, by SMART Technologies ULC of Calgary, Alberta, Canada, assignee of the subject application. As a result, the device drives 306 of the appliance software stack 112 are whiteboard application drivers and the main meeting application run on the rich meeting interface 114 is a whiteboard application.

The cloud of servers 106 and services 107 that reside on the meeting cloud 104 can be divided into those that may already exist within the organization and that the meeting appliance 102 leverages and those that the distributed system 100 provides. In Figure 2, examples of the former category comprise include calendaring server 214, directory server 216, email server 218, project server 220, wiki server 222, web application server 224, data repository 226, and administration server 228 while those of the latter category comprise configuration server 262, cloud application server 246, web server 225, messaging server 250, semantic collaboration server 240, semantic data store 242 and meeting application resolver server 252.

Cloud applications are typical desktop applications which reside and run on a plurality of servers in the meeting cloud 104, reducing the hardware requirements of the meeting appliance 102. This allows the meeting appliance 102 to execute and support applications of different versions and in different operating systems, while only requiring that the meeting appliance 102 execute a single client program.

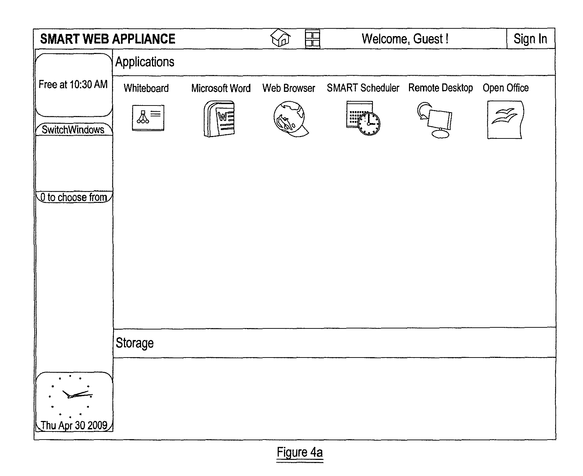

The meeting appliance 102 invokes a protocol, which is extended from the Microsoft® RemoteApp protocol to allow a user to inject annotation into the running whiteboard application and other suitable thin-client/screen-sharing protocols that are commonly used in such applications as Citrix™, X™, Windows™, etc. Other applications may also be extended and used herein. The protocol is invoked from the cloud application agent 247 to run a particular application on the respective server of the meeting cloud 104, then retrieves the graphical output of that application and displays the output on the meeting appliance 102. The graphical output may also be displayed on other meeting appliances 102 that are accessing the same application for the same meeting. This protocol isolates the graphical output of a single application, which provides the user with a seamless experience, as the application will appear no different than it would if it were running on the meeting appliance 102 itself. Figure 4A shows a screenshot of the graphical interface displayed by the interactive whiteboard employing the meeting room application. All applications available to the user are shown regardless of whether they reside on the meeting appliance 102 or on the meeting cloud 104.

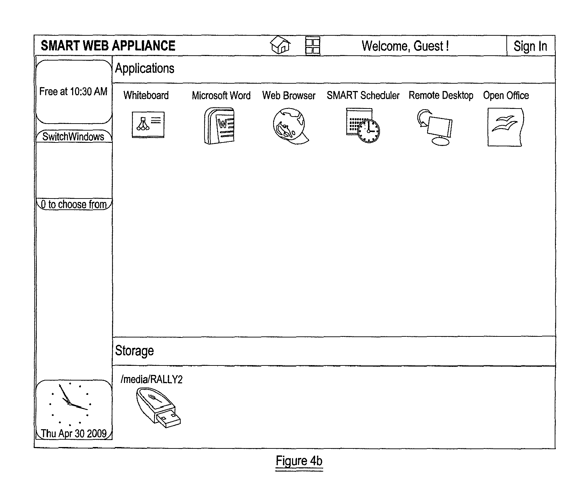

The protocol also provides for the integration of appliance-based hardware with the meeting cloud 104. In one embodiment, a file system, including a USB Mass Storage device, can be accessed locally by the cloud application, as shown in the screenshot of Figure 4B. This provides a seamless integration of the cloud application on the meeting appliance 102. In this manner, the file system of the USB can be shared with other meeting appliances at other meeting locations that are accessing the meeting cloud 104 for the same meeting.

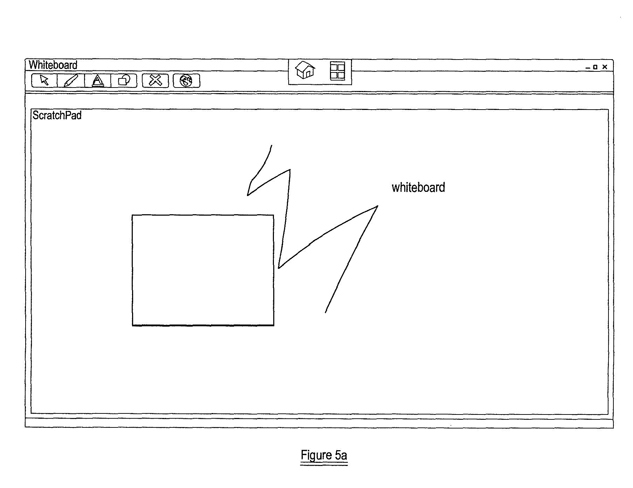

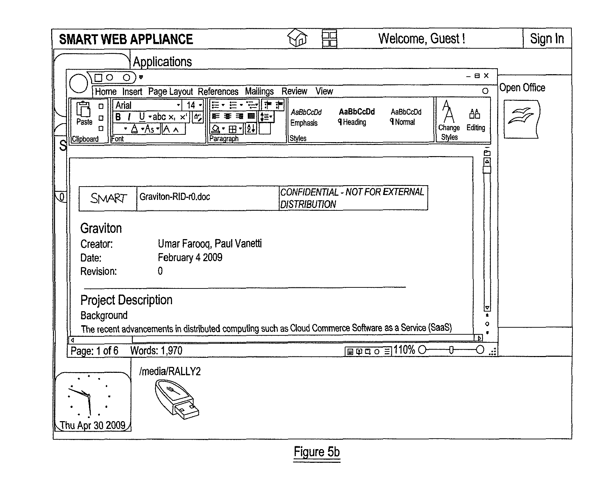

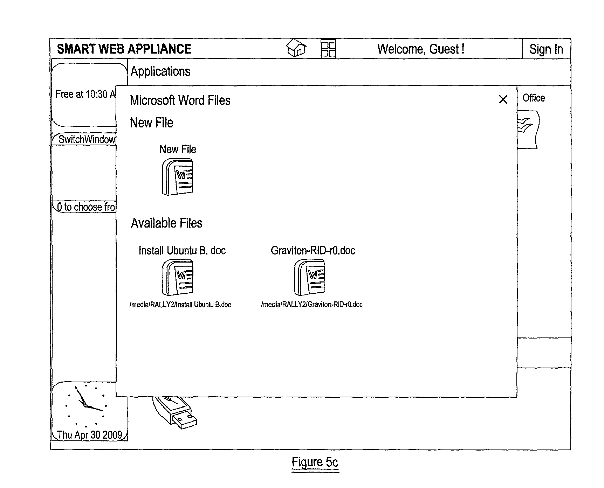

When the meeting appliance 102 is an interactive whiteboard such as a SMARTBoard™, a protocol enhancement to support the ink-annotation facilities normally available on such interactive whiteboards is provided. As described previously with reference to Figure 3, the device drivers 306 reside within the appliance software stack 112. This feature allows a user to draw into one of many recognized applications, and have their drawings converted into annotation objects in that application's native format as shown in the screenshot of Figure 5A. For example, a user can draw on top of a Microsoft Word™ document of a running Microsoft Word™ application, as shown in the screenshot of Figure 5B, and subsequently save those drawings as part of a Word document file. Figure 5C shows a screenshot of available documents within a Word application.

For a heterogeneous set of applications and services, a declarative approach referred to as Application Description Format (ADF) is utilized. ADF is an XML-based format used in the meeting appliance 102 architecture to distribute information about applications available to the meeting appliance 102. This description among other things helps with application launching, presentation and deployment. ADF scripts may reside on the meeting appliance 102, the meeting cloud 104, or both.

The ADF provides a common method for describing applications which are accessed in fundamentally different ways. Primarily, the ADF provides support for native applications, which are installed and run on the meeting appliance 102 itself, web applications, accessed through a web browser, and cloud applications, accessed through a protocol-specific client which receives the graphical output of the applications, as mentioned above. By allowing applications to be run from these three domains, the ADF enables a common platform for a heterogeneous set of applications.

The information provided by the ADF is in a declarative format. In this way, the ADF describes information needed by the meeting appliance 102 to execute an application and to represent that application to the user. This declarative approach allows the various agents (such as the deployment agent 264, generic application agent 238, etc.) to make use of this information as needed for the specific functionality and requirements of each agent. In addition, this provides more flexibility in the responsibilities and implementations of the agents. For example, the ADF could contain some semantic information, possibly relating to the context or occasion an application should become available, allowing the appliance agents to make decisions regarding the use or availability of an application.

A primary feature of the ADF is its capacity to allow virtually instantaneous access to an application. Since the ADF itself is in a declarative format, it can be deployed to a meeting appliance 102 almost instantly. The ADF only needs to describe the mechanism to access an application, and in the case of web and cloud applications, the meeting appliance 102 can interact with the applications without requiring any additional resources on the meeting appliance 102.

An advantage of the ADF is its universality, in that a single ADF contains the requisite information to run an application from a collection of applications which may exist on either the meeting appliance 102 or the meeting cloud 104. Since the ADF contains the complete information required to access an application, this information can be used by a disparate group of meeting appliances, regardless of their configuration and independent of other applications configured for each meeting appliance.

The following example illustrates a portion of a very simple instance of an ADF. The application described in this ADF is Microsoft Word^{™}. The ADF contains information to assist the meeting appliance 102 in displaying this Word application to a user on the meeting appliance 102 at the user's location, as shown in the screenshot of Figure 8. It also describes how to access this particular application and other related information e.g. a list of associated file types as set out below:
<ApplicationDescription>
<Application aid = "wordApp">
<Presentation>
<Name>Microsoft Word</Name>
<Category>Remote Desktop
Application</Category>
<lcon src="http://localhost:3156/web/word.png"/>
</Presentation>
<Invocation script="launchapp">
<Parameter name="-a" value="WINWORD"/>
</Invocation>
<FileTypes>
<FileType type=".doc"/>
<FileType type =".txt"/>
</FileTypes>
</Application>

The generic application agent 238 uses ADF to manage applications, as well as assist with other tasks such as finding relevant files for a given application. The generic application agent 238 can delegate to specialized agents such as the cloud application agent 247, the web application agent 248 and the local application agent 260 based on the category of the application. These agents utilize the launching information in ADF to launch the application for the user whether it is located on the meeting appliance 102 or the meeting cloud 104. For cloud applications, the ADF can contain complete launch information, or point to a script that contains this information as in the above example.

If the launch information changes, as in the situation, for example, where the application is moved to a new cloud application server 246. using the above approach may result in an unsuccessful attempt to launch unless the ADF for the application is updated for every meeting appliance. To avoid this requirement, the architecture introduces a notion of an "application handle" and an "application reference". The application handle comprises a unique ID assigned to the cloud application while the application reference contains complete launch information. The cloud application agent 247 uses the services of the meeting application resolver server 252 to resolve the application handle into the application reference. Therefore, if the launch information for an application changes only its reference needs to be updated at the meeting application resolver server 252.

Since the applications are described using ADF, the administrator 118 8 can quickly and easily add, remove, or update an application available to a meeting appliance 102, whether it exists on the meeting appliance or the meeting cloud 104, without interrupting the user. The distributed system 100 allows changes to the application in the form of a removal and/or an addition of an ADF in the application registry 206 of the meeting agent server 202. The presentation or graphical output of the application is substantially instantaneously available to the rich meeting interface 114 which starts reflecting the change. Since the generic application agent 238 consults the ADF to launch the application an update is seamlessly effected from the user's point of view.

The administrator 118 uses a configuration client 268 to apply these updates through the configuration server 262 of the meeting cloud 104. The configuration server 262 sends the update messages to the messaging server 250. The configuration agent 244 subscribes to the messages in the messaging server 250 related to that meeting appliance 102. Whenever the configuration agent 244 receives a new message it updates the application registry 206.

The messaging server 250 delivers messages to the meeting appliances 102. If the meeting appliance is not available, the messaging server 250 stores the message in a persistent store and sends the message to the meeting appliance 102 as soon as it is available. This ensures that the updates to the meeting appliance 102 are not lost even if they are not available when the updates are applied.

The deployment agent 264 helps deploy new local applications to the meeting appliance 102 and relies on the deployment information in ADF.

The data repository agent 227 allows the meeting appliance 102 to access different types of data repositories 226, including network file systems, content management systems, portable devices, and USB drives. In this manner, the user interacts with the data seamlessly while using the meeting appliance 102 without having any knowledge of the location of the data.

The administration agent 229 gathers meeting appliance state information and other useful stats, events, alarms, etc., and either pushes them to the administration server 228 or the administration server 228 pulls required information. The administrator 118 uses an administration client 119 to interact with the administration server 228. The administration agent 229 is based on a standard protocol such as Simple Network Management Protocol (SNMP) or Web-Based Enterprise Management (WBEM), or other network management protocols known by those of skill in the art.

The embedded messaging server 266 assists the meeting appliance 102 in networking with other meeting appliances to enable scenarios involving meetings with multiple meeting appliances within the same location.

Turning back to Figures 2 and 3, a set of methods is deployed to gather meeting related data from different sources in the organization including the calendaring servers 214, email servers 218. project servers 220, wiki servers 222 and data repositories 226. This data is converted into semantic data and using description logic reasoning more knowledge is acquired from this data. The resulting data is stored in a semantic data store 242. This method is described further in International PCT Application No. PCT/CA2009/001733 filed on December 2, 2009, assigned to SMART Technologies ULG of Calgary, Alberta, Canada, assignee of the subject application, the content of which is incorporated herein by reference in its entirety. The semantic data store 242 is based on a graph-based database that allows for scalability and better performance. The semantic collaboration server 240 comprises a set of applications which leverage the data stored in the semantic data store 242 and help adapt the meeting appliance 102 to the context of the user and/or meeting.

The meeting agent server 202 provides runtime services to the agents such as discovering other agent, communicating with other agents and sharing meeting state information with each other. The meeting agent server 202 is typically a lightweight embedded web server, utilizing hypertext transfer protocol (HTTP) and extensible markup language (XML) based messaging to communicate with agents. This allows agents to be developed in different programming languages and still use services from one another as well as exchange semantic meeting information. The meeting agent server 202 also helps keep meeting room functionality modular and flexible and allows runtime addition/removal/replacement of agents and modules to suit the needs of the environment. Since the meeting agent server 202 is based on a service oriented architecture and utilizes web protocols, it can be configured to run on the meeting cloud 104 instead of on the meeting appliance 12.

The application registry 206 contains information on the applications that have been enabled for the meeting appliance 102 by the administrator 118. Agent registry 204 contains information on the agents 214 that are currently running on the appliance software stack 112. The message store 212 facilitates reliable message exchange between agents running on the meeting appliance 102 as well as between the agents and the semantic collaboration server 240.

When an agent on the meeting appliance 102 starts up, it is securely registered with the meeting agent server 202 and receives a universally unique identification (UUID) and an entry is created in agent registry 204. This UUID is used in all future communication between the agent and the meeting agent server 202, which may be generated in accordance with the ITU standard ITU-T Rec.X..667(09/04). Each agent on the meeting appliance 102 (for example, the agents shown in Figure 2 including administrative agent 229, configuration agent 244, data repository agent 227, generic application agent 238, deployment agent 264, sensor agent 254, cloud application agent 247, web application agent 248, and local application agent 260) is registered with the meeting agent server 202 for a certain period and unless the agent renews its registration before the expiry period, it is considered to be not available and its entry is removed from the agents registry 204. This process keeps the agents registry 204 up-to-date so that the semantic collaboration server 240 can make correct decisions about meetings or events which may be based on the set of services and agents available on the meeting appliance 102. For example, if a particular meeting involves multiple meeting rooms and thus meeting appliances and a conference must be setup between those meeting appliances, the respective agents registries 204 help the semantic collaboration servers 240 select the correct applications for conferencing for each meeting appliance 102 involved in the meeting or event - the ones that are common and/or the ones that are compatible with each other.

Meeting agent 23 0 along with meeting state registry 210 and the semantic collaboration server 240 adapt the interactive whiteboard to the context of the meeting. Meeting state registry 210 partly maintains information on the current state of the meeting. The state of the meeting can include information on whether or not the meeting has started, whether a conference is required or has been set up, whether all the meeting participants are in attendance, what documents are in use, etc. For example, a meeting appliance may only know whether the local user is present, but may not be aware of whether the other participants are joining locally or remotely or if they have joined at all. This information is maintained in the semantic collaboration server 240. An example of state information that is kept solely on the meeting appliance 102 may include files that are opened by the user on that meeting appliance. The meeting agent 230 acts based on the current state of the meeting. When a user interacts with the interactive whiteboard through the rich meeting interface 114, the state of the meeting may change. Meeting agent 230 helps update the state of the meeting at the local meeting state registry 210 and also propagates this information to the semantic collaboration server 240 that also partly maintains the state of the meeting. The semantic collaboration server 240 then synchronizes the state of the meeting with other meeting appliances which are part of the same meeting. This distribution of logic between meeting agent 230 and the semantic collaboration server 240 helps to synchronize meeting activities across all participating meeting appliances while allowing for user specific activities. Meeting agent 230 can request information from the semantic collaboration server 240 using a semantic query language while state information can be exchanged between meeting agent 230 and the semantic collaboration server 240 using e.g. semantic objects or XML messages.

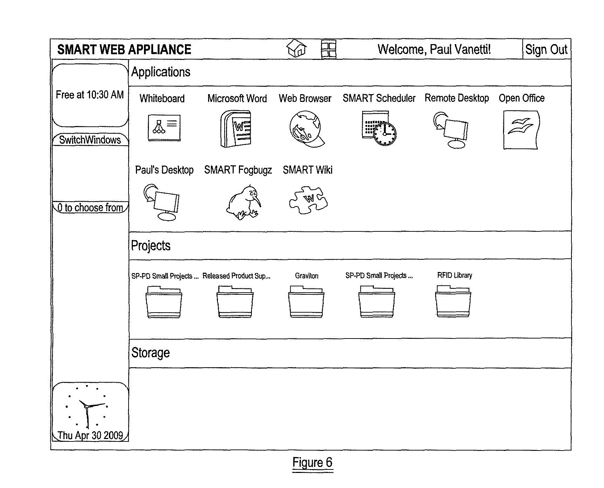

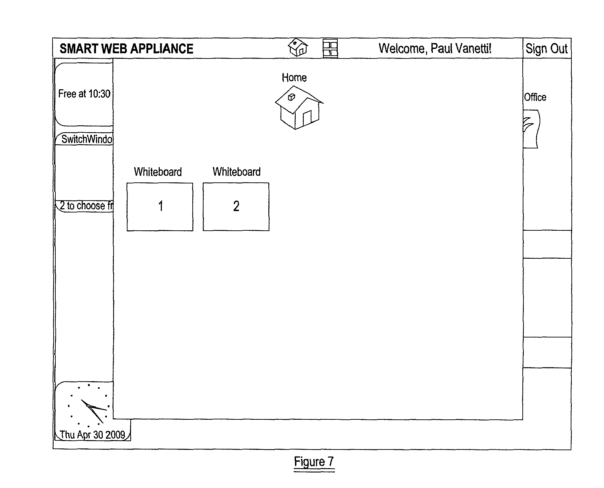

When a user signs into the meeting appliance 102 using network credentials or when the sensor agent 254 such as a radio frequency identification (RFID) agent, detects that a user has signed into the meeting appliance 102, the adaptive agent 232 along with the semantic collaboration server 240 adapts the state of the interactive whiteboard to correspond to the detected user. The adaptive agent 232 may use semantic querying and thereby query the semantic collaboration server 240 to determine the user's position or department within the organization and then serve applications which are related to the user's position. This mapping between applications and user attributes can be described using either an attribute based access language (e.g. XACML) or by attaching semantic annotations to application descriptions. The user, given suitable permissions, can override the assigned applications associated with the user's profile. In Figure 6, the screenshot shows a user has logged into the meeting appliance 102 with the available applications to that user and projects which applications the user is allowed to access and/or which may be relevant to the user at that time. Figure 7 shows a screenshot in which the user has accessed a whiteboard application. In this application, the user is shown the whiteboard files to which the user has access based on the user's profile.

The semantic collaboration server 240 can also maintain knowledge on the projects that a user is part of, the files that the user has recently accessed, and the web links and web applications which are relevant to the user. The semantic collaboration server 240 may also maintain other relevant knowledge to the user such as for example browser bookmarks, accessible network drives, user configuration settings, themes, etc. This information is used to adapt the meeting appliance to the context of the user by offering the user only relevant data, applications and links. Semantic collaboration server 240 also maintains information on the user's own desktop or laptop, and through adaptive agents 232, 236 of both the meeting appliance 102 and the meeting cloud 104, the user can access the user's own desktops or laptops without having to enter network information or network credentials to log into the user's own desktop. The user's desktop must be accessible through a network in order for it to be accessed by the meeting appliance, or through a wireless or wired direct connection to a device within the network via USB, firewire, serial link, parallel link, or any other suitable link. Since the adaptive agents gather and maintain network information about the user's desktop and the user's identity, the adaptive agents 232, 236 of the meeting appliance 102 and the meeting cloud 104 respectively are used. The adaptive agents 232, 236 seamlessly sign the user in. Similarly, the adaptive agents 232, 236 can also help serve dynamic relevant information e.g. link to his/her current meeting conference. Adaptive agents 232, 236 can also interact with the meeting agents 230, 234 on the meeting appliance and the meeting cloud respectively to automate some user activities; for example, automatically start a conference in which the user is enrolled, upon the user signing into the system. User registry 208 in the meeting agent server 202 maintains information on the currently signed in user and the user's applications/data and links and when the user signs out, the appliance is reinitialized to a "guest" state.

Although the embodiment described herein references meetings in an organizational environment, one of skill in the art will appreciate that these techniques could be applied to other information management systems, for example, information management system for conference centres, training rooms, hallway kiosks, libraries, classrooms, lecture halls, labs, open workspace areas and other teaching or meeting facilities. Furthermore, although the embodiment described herein references interactive whiteboard applications, one of skill in the art will appreciate that these techniques could be applied to other meeting appliances used in alternative environments.

As one of skill in the art will appreciate, while the meeting appliance includes the agents shown in Figure 2 (such as the administrative agent 229, the configuration agent 244, the data repository agent 227, the generic application agent 238, the deployment agent 264, the sensor agent 254, the cloud application agent 247, the web application agent 248, and the local application agent 260), other agents may reside on the meeting appliance 102. Similarly, other servers and applications may reside and run on the meeting cloud 104.

Furthermore, those of skill in the art will appreciate that variations and modifications may be made without departing from the spirit and scope thereof as defined by the appended claims.

## Claims

1. A distributed system for managing users and workspaces comprising:
a network cloud comprising at least one server configured to store and run at least one application; and
at least one meeting appliance configured to communicate with the network cloud, to run the at least one application on the network cloud, and to display output of the at least application on the meeting appliance.

2. The system of claim 1, wherein the at least one meeting appliance is configured to send interactive input associated with the at least one application to the network cloud.

3. The system of claim 2, wherein the at least one meeting appliance updates the display output of the at least one application based on the interactive input.

4. The system of claim I comprising a plurality of meeting appliances and wherein the meeting appliances are preferably located at different geographical locations.

5. The system of claim 6 wherein at least one of the meeting appliances is and preferably multiple meeting appliances are configured to send interactive input associated with the at least one application to the network cloud.

6. The system of claim 5, wherein the at least one meeting appliance updates the display output of the at least one application based on the interactive input.

7. The system of claim 1 wherein the network cloud is configured to store and run a plurality of applications and wherein the at least one meeting appliance is configured to run at least some of the applications.

8. The system of claim 7 wherein the at least one meeting appliance provides user access only to authorized applications established for the user of the at least one meeting appliance.

9. The system of claim 8, wherein the at least one meeting appliance is configured to send interactive input associated with the authorized applications to the network cloud and wherein the at least one meeting appliance preferably updates the display output of the authorized applications based on the interactive input.

10. The system of any one of claims 1 to 3 and 7 to 9 wherein the at least one meeting appliance is an interactive whiteboard.

11. The system of any one of claims 1 to 6 wherein the at least one application comprises a file access application, said file access application being configured to access at least one file on the network cloud.

12. The system of any one of claims 1 to 11 wherein the network cloud and the at least one meeting appliance employ software agents and preferably wherein the at least one meeting appliance and network cloud communicate via distributed agents resident on the at least one meeting appliance and network cloud.

13. The system of any one of claims 7 to 9 wherein each meeting appliance comprises a messaging server to handle communications between meeting appliances.

14. A method comprising:
sending a message from at least one meeting appliance to a network cloud;
executing the at least one application on the network cloud in response to the received message;
sending graphical output of the at least one application from the network cloud to the at least one meeting appliance; and
displaying the graphical output on the at least one meeting appliance.

15. The method of claim 14 further comprising:
sending interactive input associated with the at least one application from the at least one meeting appliance to the network cloud in response to user interaction with the at least one meeting appliance;
updating the graphical output of the at least one application based on the interactive input; and
sending the updated graphical output to the at least one meeting appliance for display thereon.

16. A meeting appliance comprising:
a display;
a processor; and
memory storing program code, the processor communicating with the memory and executing the program code to cause the meeting application to:
communicate with a network cloud, to run at least one application on the network cloud, and to present output of the at least application on the display.
